# EUROPEAN PATENT APPLICATION

(11) **EP 1 367 117 A1**
(43) Date of publication of application: **03.12.2003**
(21) Application number: 03076497.1
(22) Date of filing: 19.05.2003
(51) Int. Cl.: C11D 7/02, C08K 9/00, B08B 7/00

(54) **Layered inorganic particles as extruder purge materials**

(30) Priority: 28.05.2002 US 156616
(71) Applicant: EASTMAN KODAK COMPANY, Rochester, New York 14650 (US)
(72) Inventor: Blanton, Thomas Nelson, c/o Eastman Kodak Company, Rochester, New York 14650-2201 (US); Dontula, Narasimharao, c/o Eastman Kodak Company, Rochester, New York 14650-2201 (US); Majumdar, Debasis, c/o Eastman Kodak Company, Rochester, New York 14650-2201 (US); Garcia, Jose L., c/o Eastman Kodak Company, Rochester, New York 14650-2201 (US); Freedman, Gary S., c/o Eastman Kodak Company, Rochester, New York 14650-2201 (US); Barnes, Craig Llewellyn, c/o Eastman Kodak Company, Rochester, New York 14650-2201 (US)
(74) Representative: Weber, Etienne Nicolas

(57) **Abstract**

The present invention relates to a method and material for purging comprising adding a purge material of thermoplastic polymer and layered inorganic particles into polymer melt processing equipment containing residual contaminant, and passing the purge material through the processing equipment so that the residual contaminant intercalates the layered inorganic particle, thereby removing the residual contaminant from the processing equipment.

## Description

The present invention relates to a method and material for purging processing equipment.

It is well known in the art to produce articles of commerce from thermoplastic materials by means of extrusion blown molding, extrusion injection molding, blown film extrusion, profile extrusion or simple extrusion of thermoplastic materials. These materials typically consist of low density polyethylene, high density polyethylene, polypropylene, polyvinyl chloride, acrylonitrile butadiene styrene copolymer, nylon, polycarbonate, polybutylene terephthalate, polyethylene terephthalate, polyphenylene sulfide, styreneacrylonitrile, thermoplastic elastomers, as well as other polymers, copolymers and mixtures of these materials.

In actual practice, these thermoplastic polymers (TPs) should first be converted from a powdered, granular or pelletized form into a continuous stream of melted TP which then may be rolled into a desired shape, injected into a mold of the desired shape, or formed into a cylinder or parison which may be further expanded by air to conform to the inside surfaces of a blow molding mold cavity. The conversion of TPs into the continuous melt stream is usually accomplished through the use of a heated barrel screw extruder.

The typical screw extruder basically consists of a barrel and screw, and also contains a feed section and a discharge port. The barrel consists of a long heavy-walled tube of steel which contains, as its inside surface, a hard wear-resistant alloy, and the bore of the tube is ground to very close tolerances. The complete construction of the barrel is such that it is capable of handling very high pressures, in the range of 1,000-10,000 psi (6.9 - 69 MPa), without distorting or rupturing.

The outside of the barrel is usually fitted with heating or cooling units along its length, and these units are configured in zones along the length of the barrel, such that various sections of the barrel may independently be heated or cooled as desired. An opening at the feed end of the barrel serves as an introduction point for powdered, granular, or pelletized TPs into the screw, as well as for the introduction of coloring agents, or fillers, which may be included as desired. To avoid premature melting of the TP feed, the area or zone around the feed section may be cooled by means of a cooling unit.

The barrel is fitted with a close fitting internal progressive screw with helical flights, and by rotating this screw in the proper direction, material is advanced in the barrel from the feed end toward the discharge end. The screw rotating in the barrel acts, in effect, like a pump. The screw design is such that material advancing through the barrel is subjected to ever increasing pressure as the cavity volume created between the screw and the barrel diminishes as viewed along the length of the assembly from the feed end to the discharge end. In actual practice, a typical screw may consist of three distinct sections: a feed section which serves to push material into the barrel, a compression section which exerts ever increasing pressure and a high amount of shear on the TP along its length, causing melting of the TP to start and preferably complete, and a metering section which serves to complete the homogenization of the TP and to force the material out of the assembly.

Actual melting of the TP is usually caused by both heat applied to the barrel by the heating units, as well as by the heat developed in the TP due to the mechanical action applied to it by the screw, since a certain amount of slippage or bypass of the melted TP occurs along the screw flights and between the screw and the barrel. This slippage and bypass also serves to homogenize the TP and any adjuncts, such as coloring agents, added to the feed section of the unit. This slippage and bypass, although desired for efficient TP processing, causes unwanted problems, however, when finished product colors and/or the type of TP material should be changed to meet production requirements. The constant back feeding and blending which occurs in the unit, with subsequent progressive dilution of the old color or feed stock with the new color or feed stock, necessitates the production of large amounts of undesirable or unusable material until the original color or TP is cleared completely from the unit, and only the second color or TP exits from the unit in its unadulterated state.

Additionally, during normal production, tenacious additives can adsorb on the internal metal surfaces of the processing equipment. These adsorbates under open air conditions and/or at the temperatures (300-500° F, 149-260° C) and pressures (up to several tons per square inch) associated with the extrusion and molding processes can degrade and become even more difficult to clean. Although antioxidants and heat stabilizers are usually added to the plastics, small amounts of the plastic degrade and the residue particles plate out onto the surfaces of the feed lines and mold surfaces of injection molding machines, and onto the screw and barrel surfaces of extruders. Over time, the residue gradually builds up into a baked on blackish-brown film. Particles of degraded material may slough off and contaminate the processed product. Additives remaining in the adsorbed state on the metal surface can also interfere with the performance of other functional additives. Therefore, it is crucial that these materials be cleaned from the equipment, before it is ready to be used in a new application.

Currently, a number of methods are employed to clean plastics processing equipment. One method is to disassemble the equipment, and have the metal parts submerged into a hot caustic bath. Usually these baths contain some surfactants also. The caustic, over time, breaks up the degraded plastic build up. This cleaning process is the least desirable of the potential cleaning methods, as the time involved with disassembling, dip cleaning, and re-assembling the equipment adds up to substantial loss of production time. Also, there are serious safety considerations whenever hot caustic baths are employed. Another commonly used technique is cleaning the equipment in a hot fluidized bed of sand. Another cleaning method employed, usually when color changes or compound changes occur, is to simply run the mold or extruder through multiple cycles using the new color or compound. The cycle is repeated with the new compound until parts are made or extrusion occurs which are free from the previous color or filler additives. The drawback of this cleaning alternative is that generation of large amounts of scrap can occur. Often this scrap cannot be chopped up or re-ground for re-use, and ends up being landfilled.

In an effort to speed up this cleaning or change over process, compounds known as purging compounds (PCs) are employed. There are two basic types of PCs, physical and chemical. Physical PCs (PPCs) are merely thermoplastics, occasionally containing abrasive materials such as diatomaceous earth, which may have a higher melt point than that of the material being purged from the equipment. Thus they operate by attempting to physically push the old material out of the equipment. In most cases they are marginally effective at best, and, if abrasive, can cause premature wearing of the screw, barrel and associated equipment if used on a regular basis. A PPC can also consist simply of a clear or neutral thermoplastic, which only acts as an indicator to tell the operator when the original color has been purged from the equipment. In any case, large amounts of material should be run through the equipment, since the constant mixing and blending action of the screw tends to successively dilute the original color with the PPC rather than just push it through and out of the equipment. In actual practice, the new color is sometimes simply charged to the screw, and the process is run with the new color until all traces of the old color have disappeared. This may take up to several hours, and may result in hundreds of pounds of scrap. In extreme cases, the old color still occasionally appears in manufactured parts several days after changeover. In any event, PPCs do not usually remove material from dead spots in the system, such as occur in valves and dies, and degraded materials such as carbonized particles of polymer usually remain in the equipment to exit at a later time resulting in manufactured parts, which do not meet specifications.

Another type of purging compound, the chemical purging compound (CPC), attacks the problem in most cases by attempting to break down plastic residues in the equipment. These compounds typically contain thermoplastic resins, organic and inorganic salts, and inert materials. Typically their use may require that the feed to the screw be cut off, and the equipment then run until material ceases to exit from the discharge end. A quantity of neutral color thermoplastic is then charged to the screw and allowed to run out in the same manner. The system is then filled with CPC, and as soon as it begins to exit, the screw rotation is stopped, and with heat continually applied to the barrel, the compound is left in the equipment for a period of time, usually 15 minutes or more, to complete the reaction. In some cases, the temperature of the barrel heating units is increased, causing the barrel temperature to rise. After the reaction is deemed to be complete, the barrel temperature is lowered to its original state and the screw is restarted, causing the CPC to exit. The new desired color is then introduced into the screw feed and the remainder of the CPC is purged by means of the new color. It is not unheard of for a chemical purge to take in excess of two hours to complete, from start to finish, especially if the barrel temperature is to be raised and then lowered. Many CPCs also tend to emit organic vapors and gasses as they work, and from an ecological and safety standpoint, leave much to be desired.

Another type of PC, the liquid PC, is also occasionally employed. These liquids may be aqueous in nature, and although usually inexpensive, are prone to slippage, wherein the friction between entire thermoplastic mass and the screw and barrel is reduced to the point where the assembly no longer acts like a pump, and the mass ceases to be forced under high pressure through the unit. Additionally, the aqueous component of these liquid PCs does not combine with the resins in an efficient and homogeneous manner within the apparatus.

A number of PC materials are disclosed in U.S. Pat. Nos. 5,139,694, 5,443,768, 5,424,012, 5,427,623, 5,397,498, 5,395,456, 5,298,078, 5,238,608, 5,236,514, 5,124,383, 5,108,645, 5,087,653, and 4,838,945. Specifically, U.S. Pat. No. 5,298,078 teaches the melting of polystyrene and polyethylene and addition of alkaline salts and glass fibers as cleaning ingredients. U.S. Pat. No. 5,236,514 describes a purging composition containing both a matrix and a carrier resin of specific compositions along with a phosphate ester or metal salt of a carboxylic acid and an abrasive such as diatomaceous earth. U.S. Pat. No. 5,139,694 and U.S. Pat. No. 5,124,383 teach the melting of polyethylene resin and then adding in abrasive inorganic fillers and polyethylene waxes and fatty acid amide waxes. U.S. Pat. No. 5,395,456 teaches the melting of polymers and inclusion of calcium carbonate abrasive, and rosins as cleaning ingredients. U.S. Pat. No. 5,443,768 and U.S. Pat. No. 5,108,645 both disclose the melting of polymers and the inclusion of hard methacrylate and acrylate compounds as cleaning media. Also, U.S. Pat. No. 5,397,498 discloses the melting of a thermoplastic and inclusion of polyalkylene oxide based polyol cleaning agents. An alternative method is taught by U.S. Pat. No. 5,427,623, which involves making an Acrylonitrile Butadiene Styrene (ABS) powder (or resin) cleaning compound, which contains water. The ABS cleaning resin is produced by taking an ABS emulsion and separating the ABS polymer from the emulsion by adding an ionic salt to the emulsion, in large enough quantities to cause the emulsion to break. U.S. Pat. No. 5,424,012 teaches using a frothing additive in a purge material.

A major concern about some of the compositions disclosed in the art is that these compositions tend to be abrasive in nature. Acrylate based resins that require high temperatures for melting to flow state, are normally used, and can be very abrasive on the metal surfaces of the equipment. Further addition of abrasive inorganic particles, such as diatomaceous earth, simply exasperates this situation and can significantly detract from the useful life of the equipment.

Although the art discloses a number of purge compositions, an acute need still persists for an effective purge composition and method for cleaning plastics processing equipment, particularly those using tenacious adsorbates such as dyes and colorants. Such a composition and method should not require the disassembly of equipment to accomplish proper cleaning, nor should it require highly abrasive compositions, deleterious to the equipment life.

Over the last decade or so, the utility of inorganic layered nanoparticles as additives to enhance polymer performance has been well established. Ever since the seminal work conducted at Toyota Central Research Laboratories, polymer-layered material nanocomposites have generated interest across various across industries. The unique physical properties of these nanocomposites have been explored by such varied industrial sectors as the automotive industry, the packaging industry, and plastics manufacturers. These properties include improved mechanical properties, such as elastic modulus and tensile strength, thermal properties such as coefficient of linear thermal expansion and heat distortion temperature, barrier properties, such as oxygen and water vapor transmission rate, flammability resistance, ablation performance, and solvent uptake. Some of the related prior art is illustrated in U.S. Patents 4,739,007, 4,810,734, 4,894,411, 5,102,948, 5,164,440, 5,164,460, 5,248,720, 5,854,326, and 6,034,163.

It has been unexpectedly discovered that these inorganic layered nanoparticles when incorporated in a suitable thermoplastic material can constitute excellent purge compositions. The efficiency of these purge compositions for cleaning minute amount of residual dyes and colorants was surprisingly noted during processing of these nanocomposites, in equipment which had been previously purged repeatedly using other conventional commercial purge composition.

It is an object of this invention to provide a method and a material for purging. A further object is to provide a method and a material, which is particularly useful in removing contaminants from thermoplastic processing equipment. Another object is to provide a composition, which is ideally suited for removing contaminants such as dyes and colorants, which can intercalate inorganic layered materials. Another object of this invention is to provide a purge material, which is not excessively abrasive. An even further object of this invention is to provide a method and a material for purging that does not necessarily involve disassembly of equipment to accomplish proper cleaning.

These and other objects are accomplished by a method and material for purging comprising adding a purge material comprising at least one thermoplastic polymer and at least one layered inorganic particle into polymer melt processing equipment, wherein said polymer melt processing equipment contains at least one residual contaminant, and passing said purge material through said processing equipment, wherein said at least one residual contaminant intercalates said layered inorganic particle thereby removing said at least one residual contaminant from said polymer melt processing equipment.

The present invention includes several advantages. It is believed that through the choice of inorganic layered materials capable of intercalation chemistry, the purge composition can provide very efficient purging capability. In purging common extruders using dyes, removal of residual dye often poses a huge challenge. As alluded to earlier, very small amount of an adherent dye from previous runs can show up in subsequent runs, causing unacceptable products and waste. This problem may be eliminated with the present invention. The other advantage of the present invention lies in the fact that it does not require use of any aggressive, highly alkaline, chemical compounds such as monoethanolamine often used in the industry. Such compounds not only require special handling and disposal because of health and safety issues but also may have a corrosive effect on the metallic components of the processing equipment. A further advantage of the invention is derived from the fact that it does not necessitate use of abrasive materials, which, as pointed out earlier, may adversely affect the lifetime of the equipment. An even further advantage of the invention is derived from the fact that it does not require any disassembly of the processing equipment for cleaning. These and other advantages will be apparent from the detailed description below.

Whenever used in the specification the terms set forth have the following meaning:
"Nanocomposite" means a composite material wherein at least one component comprises an inorganic phase, such as a smectite clay, with at least one dimension in the 0.1 to 100 nanometer range.
"Plates" means particles with two comparable dimensions significantly greater than the third dimension, e.g, length and width of the particle being of comparable size but orders of magnitude greater than the thickness of the particle.
"Layered material" means an inorganic material such as a smectite clay that is in the form of a plurality of adjacent bound layers.
"Platelets" means individual layers of the layered material.
"Intercalation" means the insertion of one or more foreign molecules or parts of foreign molecules between platelets of the layered material, usually detected by X-ray diffraction technique, as illustrated in U.S. Patent No. 5,891,611 (line 10, col.5 - line 23, col. 7).
"Intercalant" means the aforesaid foreign molecule inserted between platelets of the aforesaid layered material.
"Exfoliation" or "delamination" means separation of individual platelets in to a disordered structure without any stacking order.
"Intercalated " refers to layered material that has at least partially undergone intercalation and/or exfoliation.
"Organoclay" means clay material modified by organic molecules.
"Splaying" refers to the separation of the layers of the layered material, which may be to a degree which still maintains a lattice-type arrangement, as in intercalation, or to a degree which spreads the lattice structure to the point of loss of lattice structure, as in exfoliation.

The purge material useful for this invention primarily comprises a layered particle and a thermoplastic polymer.

The layered particle can be selected from any layered materials but most suitable for this invention are materials in the shape of plates with significantly high aspect ratio. However, other shapes with high aspect ratio will also be advantageous. The layered materials suitable for this invention may comprise clays or non-clays. These materials include phyllosilicates, e.g., montmorillonite, particularly sodium montmorillonite, magnesium montmorillonite, and/or calcium montmorillonite, nontronite, beidellite, volkonskoite, hectorite, saponite, sauconite, sobockite, stevensite, svinfordite, vermiculite, magadiite, kenyaite, talc, mica, kaolinite, and mixtures thereof. Other useful layered materials include illite, mixed layered illite/smectite minerals, such as ledikite and admixtures of illites with the layered materials named above. Other useful layered materials, particularly useful with anionic thermoplastic polymers, may be the layered double hydroxide clays or hydrotalcites, such as Mg₆Al_{3.4}(OH)_{18.8}(CO₃)_{1.7}H₂O, which have positively charged layers and exchangeable anions in the interlayer spaces. Other layered materials having little or no charge on the layers may be useful provided they can be splayed with swelling agents, which expand their interlayer spacing. Such materials include chlorides such as FeCl₃, FeOCI, chalcogenides, such as TiS₂, MoS₂, and MoS₃, cyanides such as Ni(CN)₂ and oxides such as H₂Si₂O₅, V₆O₁₃, HTiNbO₅, Cr_{0.5}V_{0.5}S₂, V₂O₅, Ag doped V₂O₅, W_{0.2}V_{2.8}O7, Cr₃O₈, MoO₃(OH)₂, VOPO₄-2H₂O, CaPO₄CH₃-H₂O, MnHAsO₄-H₂O, or Ag₆Mo₁₀O₃₃. Preferred layered materials may be swellable so that other agents, usually organic ions or molecules, can intercalate and/or exfoliate the layered material resulting in a desirable dispersion of the inorganic phase. These swellable layered materials include phyllosilicates of the 2:1 type, as defined in the literature (vide, for example, "An introduction to clay colloid chemistry," by H. van Olphen, John Wiley & Sons Publishers). Typical phyllosilicates with ion exchange capacity of 50 to 300 milliequivalents per 100 grams are preferred. Preferred layered materials for the present invention include clays, especially smectite clay such as montmorillonite, nontronite, beidellite, volkonskoite, hectorite, saponite, sauconite, sobockite, stevensite, svinfordite, halloysite, magadiite, kenyaite and vermiculite as well as layered double hydroxides or hydrotalcites. Most preferred layered materials include montmorillonite, hectorite and hydrotalcite, which are capable of intercalation by a variety of molecules, and also commercially available in large quantities.

The aforementioned layered materials can be natural or synthetic, for example, synthetic smectites. This distinction can influence the particle size and/or the level of associated impurities. Typically, synthetic layered materials may be smaller in lateral dimension, and therefore possess smaller aspect ratio. However, synthetic layered materials may be purer and may be of narrower size distribution, compared to natural clays and may not require any further purification or separation. For this invention, the clay particles should have a lateral dimension of from 0.01 µm to 5 µm, and preferably from 0.05 µm to 2 µm, and more preferably from 0.1 µm to 1 µm. The thickness or the vertical dimension of the clay particles can preferably vary from 0.5 nm to 10 nm, and more preferably from 1 nm to 5nm. The aspect ratio, which is the ratio of the largest and smallest dimension of the layered material particles should be >10:1 and preferably >100:1 and more preferably >1000:1 for this invention. The aforementioned limits regarding the size and shape of the particles are to ensure adequate improvements in some properties of the nanocomposites without deleteriously affecting others. For example, a large lateral dimension may result in an increase in the aspect ratio, a desirable criterion for improvement in mechanical properties. However, very large particles can be abrasive to processing equipment. Also, when large particles are used, for a given number of particles needed per unit volume, the loading of the purge material becomes very high.

The clay used in this invention is preferably an organoclay. Organoclays may be produced by interacting the unfunctionalized clay with suitable intercalants to produce an organically modified inorganic particle. These intercalants may be typically organic compounds, for example, surfactants, which may be neutral or ionic. Useful neutral organic molecules include polar molecules such as amides, esters, lactams, nitriles, ureas, carbonates, phosphates, phosphonates, sulfates, sulfonates, or nitro compounds.

The neutral organic intercalants can be monomeric, oligomeric or polymeric. Neutral organic molecules can cause intercalation in the layers of the layered materials through hydrogen bonding, without completely replacing the original charge balancing ions. Useful ionic compounds may be cationic surfactants including onium species such as ammonium (primary, secondary, tertiary, and quaternary), phosphonium, or sulfonium derivatives of aliphatic, aromatic or arylaliphatic amines, phosphines and sulfides. Typically onium ions can cause intercalation in the layers through ion exchange with the metal cations of the preferred smectite clay. A number of commercial organoclays are available from clay vendors, which may be used in the practice of this invention.

The thermoplastic polymer used in the invention can be any natural or synthetic polymer. The thermoplastic polymer may also be any water soluble or insoluble polymer. The water soluble polymers preferred include gelatin, poly(vinyl alcohol), poly(ethylene oxide), polyvinylpyrolidinone, poly(acrylic acid), poly(styrene sulfonic acid), polyacrylamide, and quaternized polymers. The thermoplastic polymers useful in the practice of the invention may also be extrudable and moldable.

The thermoplastic polymer may be a thermoplastic resin. Illustrative of useful thermoplastic resins are polylactones such as poly(pivalolactone), poly(caprolactone), polyurethanes derived from reaction of diisocyanates such as 1,5-naphthalene diisocyanate, p-phenylene diisocyanate, m-phenylene diisocyanate, 2,4-toluene diisocyanate, 4,4'-diphenylmethane diisocyanate, 3,3'-dimethyl-4,4'diphenyl-methane diisocyanate, 3,3-'dimethyl-4,4'-biphenyl diisocyanate, 4,4'-diphenylisopropylidene diisocyanate, 3,3'-dimethyl-4,4'-diphenyl diisocyanate, 3,3'-dimethyl-4,4'-diphenylmethane diisocyanate, 3,3'-dimethoxy-4,4'-biphenyl diisocyanate, dianisidine diisocyanate, tolidine diisocyanate, hexamethylene diisocyanate, 4,4'- diisocyanatodiphenylmethane, and linear long-chain diols such as poly(tetramethylene adipate), poly(ethylene adipate), poly(1,4-butylene adipate), poly(ethylene succinate), poly(2,3-butylenesuccinate), polyether diols, polycarbonates such as poly(methane bis(4-phenyl) carbonate), poly(1,1-ether bis(4-phenyl) carbonate), poly(diphenylmethane bis(4-phenyl)carbonate), poly(1,1-cyclohexane bis(4-phenyl)carbonate), poly(2,2-bis-(4-hydroxyphenyl) propane) carbonate, polysulfones, polyether ether ketones, polyamides such as poly (4-amino butyric acid), poly(hexamethylene adipamide), poly(6-aminohexanoic acid), poly(m-xylylene adipamide), poly(p-xylyene sebacamide), poly(2,2,2-trimethyl hexamethylene terephthalamide), poly(metaphenylene isophthalamide) (Nomex®), poly(p-phenylene terephthalamide)(Kevlar®), polyesters such as poly(ethylene azelate), poly(ethylene-1,5-naphthalate), poly(ethylene-2,6-naphthalate), poly(1,4-cyclohexane dimethylene terephthalate), poly(ethylene oxybenzoate) (A-Tell®), poly(para-hydroxy benzoate) (Ekonol®), poly(1,4-cyclohexylidene dimethylene terephthalate) (Kodel®) (cis), poly(1,4-cyclohexylidene dimethylene terephthalate) (Kode®1) (trans), polyethylene terephthlate, polybutylene terephthalate, poly(arylene oxides) such as poly(2,6-dimethyl-1,4-phenylene oxide), poly(2,6-diphenyl-1,4-phenylene oxide), poly(arylene sulfides) such as poly(phenylene sulfide), polyetherimides, vinyl polymers and their copolymers such as poly(vinyl acetate), poly(vinyl alcohol), poly(vinyl chloride), poly(vinyl butyral), poly(vinylidene chloride), ethylene-vinyl acetate copolymers, polyacrylics, polyacrylate and their copolymers such as poly(ethyl acrylate), poly(n-butyl acrylate), poly(methylmethacrylate), poly(ethyl methacrylate), poly(n-butyl methacrylate), poly(n-propyl methacrylate), poly(acrylamide), polyacrylonitrile, poly(acrylic acid), ethylene-acrylic acid copolymers, ethylene-vinyl alcohol copolymers acrylonitrile copolymers, methyl methacrylate-styrene copolymers, ethylene-ethyl acrylate copolymers, methacrylated budadiene-styrene copolymers, polyolefins such as (linear) low and high density poly(ethylene), poly(propylene), chlorinated low density poly(ethylene), poly(4-methyl-1-pentene), poly(ethylene), poly(styrene), ionomers, poly(epichlorohydrins), poly(urethane) such as the polymerization product of diols such as glycerin, trimethylol-propane, 1,2,6-hexanetriol, sorbitol, pentaerythritol, polyether polyols, polyester polyols with a polyisocyanate such as 2,4-tolylene diisocyanate, 2,6-tolylene diisocyante, 4,4'-diphenylmethane diisocyanate, 1,6-hexamethylene diisocyanate, 4,4'-dicycohexylmethane diisocyanate, and polysulfones such as the reaction product of the sodium salt of 2,2-bis(4-hydroxyphenyl) propane and 4,4'-dichlorodiphenyl sulfone, furan resins such as poly(furan), cellulose ester plastics such as cellulose acetate, cellulose acetate butyrate, cellulose propionate, silicones such as poly(dimethyl siloxane), poly(dimethyl siloxane), poly(dimethyl siloxane co-phenylmethyl siloxane), protein plastics, polyethers, polyimides, polyvinylidene halides, polycarbonates, polyphenylenesulfides, polytetrafluoroethylene, polyacetals, polysulfonates, polyester ionomers, polyolefin ionomers. Copolymers and/or mixtures of these aforementioned polymers can also be used.

Vulcanizable and thermoplastic rubbers useful in the practice of this invention may also vary widely. Illustrative of such rubbers are brominated butyl rubber, chlorinated butyl rubber, polyurethane elastomers, fluoroelastomers, polyester elastomers, butadiene/acrylonitrile elastomers, silicone elastomers, poly(butadiene), poly(isobutylene), ethylene-propylene copolymers, ethylene-propylene-diene terpolymers, sulfonated ethylene-propylene-diene terpolymers, poly(chloroprene), poly(2,3-dimethylbutadiene), poly(butadiene-pentadiene), chlorosulphonated poly(ethylenes), poly(sulfide) elastomers, block copolymers, made up of segments of glassy or crystalline blocks such as poly(styrene), poly(vinyl-toluene), poly(t-butyl styrene), polyester and the elastomeric blocks such as poly(butadiene), poly(isoprene), ethylene-propylene copolymers, ethylene-butylene copolymers, polyether ester as for example the copolymers in poly(styrene)-poly(butadiene)-poly(styrene) block copolymer manufactured by Shell Chemical Company under the trade name of Kraton®. Copolymers and/or mixtures of these aforementioned polymers can also be used. Preferred thermoplastic polymers for the present invention are thermoplastic polymers such as polyamides, polyesters, and polymers of alpha-beta unsaturated monomers and copolymers.

Polyamides, which may be used in the present invention, may be synthetic linear polycarbonamides characterized by the presence of recurring carbonamide groups as an integral part of the polymer chain, which may be separated from one another by at least two carbon atoms. Polyamides of this type include polymers, generally known in the art as nylons, obtained from diamines and dibasic acids having the recurring unit represented by the general formula:

--NHCOR¹COHNR² --

in which R¹ may be an alkylene group of at least 2 carbon atoms, preferably from 2 to 11 or arylene having at least 6 carbon atoms, preferably 6 to 17 carbon atoms, and R² may be selected from R¹ and aryl groups. Also, included may be copolyamides and terpolyamides obtained by known methods, for example, by condensation of hexamethylene diamine and a mixture of dibasic acids consisting of terephthalic acid and adipic acid. Polyamides of the above description are well-known in the art and include, for example, the copolyamide of 30% hexamethylene diammonium isophthalate and 70% hexamethylene diammonium adipate, poly(hexamethylene adipamide) (nylon 6,6), poly(hexamethylene sebacamide) (nylon 6, 10), poly(hexamethylene isophthalamide), poly(hexamethylene terephthalamide), poly(heptamethylene pimelamide) (nylon 7,7), poly(octamethylene suberamide) (nylon 8,8), poly(nonamethylene azelamide) (nylon 9,9), poly(decamethylene azelamide) (nylon 10,9), poly(decamethylene sebacamide) (nylon 10,10), poly(bis(4-amino cyclohexyl)methane-1,10-decane-carboxamide)), poly(m-xylylene adipamide), poly(p-xylene sebacamide), poly(2,2,2-trimethyl hexamethylene terephthalamide), poly(piperazine sebacamide), poly(p-phenylene terephthalamide), or poly(metaphenylene isophthalamide).

Other useful polyamides may be those formed by the polymerization of amino acids and derivatives thereof as, for example, lactams. Illustrative of these useful polyamides are poly(4-aminobutyric acid) (nylon 4), poly(6-aminohexanoic acid) (nylon 6), poly(7-aminoheptanoic acid) (nylon 7), poly(8-aminooctanoic acid) (nylon 8), poly(9-aminononanoic acid) (nylon 9), poly(10-amino-decanoic acid) (nylon 10), poly(11-aminoundecanoic acid) (nylon 11), or poly(12-aminododecanoic acid) (nylon 12).

Preferred polyamides for use in the practice of this invention include poly(caprolactam), poly(12-aminododecanoic acid), poly(hexamethylene adipamide), poly(m-xylylene adipamide), and poly(6-aminohexanoic acid) and copolymers and/or mixtures thereof, for their widespread application and effectiveness in the present invention.

Other polymers, which may be employed in the practice of this invention, are linear polyesters. The type of polyester is not critical and the particular polyesters chosen for use in any particular situation will depend essentially on the physical properties and features, i.e., tensile strength or modulus, desired in the final form. Thus, a multiplicity of linear thermoplastic polyesters having wide variations in physical properties may be suitable for use in this invention.

The particular polyester chosen for use can be a homo-polyester or a co-polyester, or mixtures thereof as desired. Polyesters may be normally prepared by the condensation of an organic dicarboxylic acid and organic diols. Illustrative examples of useful polyesters will be described herein below in terms of these diol and dicarboxylic acid precursors.

Polyesters which may be suitable for use in this invention are those which may be derived from the condensation of aromatic, cycloaliphatic, and aliphatic diols with aliphatic, aromatic and cycloaliphatic dicarboxylic acids and may be cycloaliphatic, aliphatic or aromatic polyesters. Exemplary of useful cycloaliphatic, aliphatic and aromatic polyesters which can be utilized in the practice of this invention are poly(ethylene terephthalate), poly(cyclohexlenedimethylene) terephthalate, poly(ethylene dodecate), poly(butylene terephthalate), poly(ethylene naphthalate), poly(ethylene(2,7-naphthalate)), poly(methaphenylene isophthalate), poly(glycolic acid), poly(ethylene succinate), poly(ethylene adipate), poly(ethylene sebacate), poly(decamethylene azelate), poly(ethylene sebacate), poly(decamethylene adipate), poly(decamethylene sebacate), poly(dimethylpropiolactone), poly(para-hydroxybenzoate) (Ekonol®), poly(ethylene oxybenzoate) (A-tell®), poly(ethylene isophthalate), poly(tetramethylene terephthalate, poly(hexamethylene terephthalate), poly(decamethylene terephthalate), poly(1,4-cyclohexane dimethylene terephthalate) (trans), poly(ethylene 1,5-naphthalate), poly(ethylene 2,6-naphthalate), poly(1,4-cyclohexylene dimethylene terephthalate), (Kodel®) (cis), and poly(1,4-cyclohexylene dimethylene terephthalate (Kodel®) (trans).

Polyester compounds prepared from the condensation of a diol and an aromatic dicarboxylic acid may be preferred for use in this invention. Illustrative of such useful aromatic carboxylic acids are terephthalic acid, isophthalic acid, o-phthalic acid, 1,3-napthalenedicarboxylic acid, 1,4 napthalenedicarboxylic acid, 2,6-napthalenedicarboxylic acid, 2,7-napthalenedicarboxylic acid, 4,4'-diphenyldicarboxylic acid, 4,4'-diphenysulfphone-dicarboxylic acid, 1,1,3-trimethyl-5-carboxy-3-(p-carboxyphenyl)-idane, diphenyl ether 4,4'-dicarboxylic acid, bis-p(carboxyphenyl) methane. Of the aforementioned aromatic dicarboxylic acids, those based on a benzene ring (such as terephthalic acid, isophthalic acid, orthophthalic acid) are preferred for use in the practice of this invention. Of these preferred acid precursors, terephthalic acid is a particularly preferred acid precursor because it leads to polyesters that are less prone to degradation during melt processing and more dimensionally stable.

Preferred polyesters for use in the practice of this invention include poly(ethylene terephthalate), poly(butylene terephthalate), poly(1,4-cyclohexylene dimethylene terephthalate) and poly(ethylene naphthalate) and copolymers and/or mixtures thereof. Among these polyesters of choice, poly(ethylene terephthalate) is most preferred, because of its excellent mechanical strength, manufacturability, and effectiveness in the present invention.

Another set of useful thermoplastic polymers may be formed by polymerization of alpha-beta-unsaturated monomers of the formula:

R³ R⁴ C=CH₂

wherein: R³ and R⁴ may be the same or different and may be cyano, phenyl, carboxy, alkylester, halo, alkyl, alkyl substituted with one or more chloro or fluoro, or hydrogen. Illustrative of such preferred polymers are polymers of ethylene, propylene, hexene, butene, octene, vinylalcohol, acrylonitrile, vinylidene halide, salts of acrylic acid, salts of methacrylic acid, tetrafluoroethylene, chlorotrifluoroethylene, vinyl chloride, styrene. Copolymers and/or mixtures of these aforementioned polymers can also be used in the present invention.

Preferred thermoplastic polymers formed by polymerization of alpha-beta-unsaturated monomers for use in the practice of this invention are poly(propylene), poly(ethylene), poly(styrene) and copolymers and/or mixtures thereof, with poly(propylene) polymers and copolymers being most preferred for their low cost and good mechanical and surface properties.

Another set of synthetic polymers useful as thermoplastic polymers for the present invention includes thermoset polymer materials such as, unsaturated polyesters, alkyds, phenolic polymers, amino plastics, epoxy resins, polyurethanes, and polysulfides.

The preferred thermoplastic polymers suitable for the invention are those polymeric compounds having good thermal stability and a low melt index, preferably from 0.3 to 5. Exemplars include, but are not limited to, polyolefins such as polyethylene, polypropylene, polystyrene, ABS resins, polyamide, polyester, polycarbonate resins, polyvinylpyrolidinone, polyethylene oxide, as well as their interpolymers and blends.

The purge material of the invention can be formed by simple dry blending of suitable inorganic layered particles and the thermoplastic polymer. However, it is preferred to be formed by incorporating the layered particles in the thermoplastic polymer by any method known in the art of making nanocomposites, to ensure a homogenous dispersion. Typically, nanocomposites are formed by dispersing the layered material, which is usually a clay, in suitable monomers or oligomers, which may be subsequently polymerized. Alternatively, the clay may be melt blended with the polymer, oligomer or mixtures thereof at temperatures preferably comparable to their melting point or above, and sheared. In another method, the clay and the polymer, oligomer or mixtures may be combined in a solvent phase, followed by solvent removal through drying. Of the aforesaid methods, the one involving melt blending is preferred for making the purge material of the invention because of processing ease.

In a preferred embodiment of the invention the layered material, preferably a clay, together with any optional addenda, may be melt blended with the thermoplastic polymer used in the invention using any suitable mixing device such as a single screw compounder, blender, mixer, spatula, press, extruder, molder. However, it is preferred to use a suitable batch mixer, continuous mixer or twin screw compounder, to ensure proper mixing. An example of a twin screw compounder is a Leistritz Micro 27. Twin screw extruders may be built on a building block principle. Thus, mixing of additives, residence time of resin, as well as point of addition of additives can be easily changed by changing screw design, barrel design and processing parameters. The Leistritz machine is such a versatile machine. Similar machines are also provided by other twin screw compounder manufacturers like Werner and Pfleiderrer, Berstorff, which can be operated either in the co-rotating or the counter-rotating mode. The Leistritz Micro 27 compounder may be operated in the co-rotating or the counter rotating mode.

The screws of the Leistritz Micro 27 compounder are 27 mm in diameter, and they have a functionary length of 40 diameters. The maximum number of barrel zones for this compounder is 10. The maximum screw rotation speed for this compounder is 500 rpm. This twin screw compounder may be provided with main feeders through which resins may be fed, while additives might be fed using one of the main feeders or using the two side stuffers. If the side stuffers may be used to feed the additives then screw design needs to be appropriately configured. The preferred mode of addition of layered material such as clay to the thermoplastic polymer may be through the use of the side stuffer, to ensure proper viscous mixing and to ensure dispersion of the layered material through the polymer matrix as well as to control the thermal history of the additives. In this mode, the thermoplastic polymer is fed using the main resin feeder, and is followed by the addition of the clay through the downstream side stuffer. Alternatively, the clay and the polymer can be fed using the main feeders at the same location. In yet another embodiment the clay can be pre-dispersed in a thermoplastic polymer in a masterbatch, and further diluted in in the compounder. Such clay-polymer masterbatches are commercially available from a number of vendors (such as Nanocor). As before, the masterbatch and the thermoplastic polymer can be fed through the main resin feeder and/or the side stuffer, depending on specific objectives. It is preferred that the resultant purge material obtained after compounding may be further processed into pellets, prills, granules, strands, fibers, powder for subsequent use.

The weight ratio of layered material to thermoplastic polymer in the purge composition may widely vary depending on application. However, it is preferred that the ratio is ≥ 0.1:99.9, more preferably ≥ 5:95 and even more preferably ≥ 10:90, to ensure effective purging.

Besides layered particle and thermoplastic polymer, the purge material of the invention can include any optional addenda. These addenda can include nucleating agents, fillers, plasticizers, surfactants, intercalants, compatibilizers, coupling agents, impact modifiers, chain extenders, colorants, lubricants, antistatic agents, pigments such as titanium oxide, zinc oxide, talc, calcium carbonate, dispersants such as fatty amides, (e.g., stearamide), metallic salts of fatty acids, e.g., zinc stearate, magnesium stearate, dyes such as ultramarine blue, cobalt violet, antioxidants, fluorescent whiteners, ultraviolet absorbers, fire retardants, abrasives or roughening agents such as diatomaceous earth, cross linking agents, foaming agents. These optional addenda and their corresponding amounts can be chosen according to need. Incorporation of these optional addenda in the purge material can be accomplished by any known method.

The layered material in the purge composition may or may not be intercalated. It is, however, preferred that the layered material is partially intercalated. It is believed, without being bound to any specific theory, that partial intercalation by any organic molecule ensures the layered particle to be most amenable to purge minute contaminants most effectively. The layered material is most suitable to purge contaminants such as dyes and colorants, pigmented or otherwise, which can intercalate the layered particle. These dyes and colorants can be anionic, nonionic, cationic, organic, metallo-organic, or inorganic in nature. There may be one or more dyes, colorants, or pigments that intercalates the layered material. Residual contaminants could also be comprised of nucleating agents, fillers, plasticizers, surfactants, intercalants, compatibilizers, coupling agents, impact modifiers, chain extenders, colorants, lubricants, antistatic agents, pigments such as titanium oxide, zinc oxide, talc, calcium carbonate, dispersants such as fatty amides, (e.g., stearamide), metallic salts of fatty acids, e.g., zinc stearate, magnesium stearate, dyes such as ultramarine blue, cobalt violet, antioxidants, fluorescent whiteners, ultraviolet absorbers, fire retardants, abrasives or roughening agents such as diatomaceous earth, cross linking agents, foaming agents and/or derivatives thereof, which can be formed through thermal and/or mechanical degradation in the processing equipment.

The residual contaminant may also include resins. These resin contaminants typically have the capability to intercalate layered materials. Examples of resin contaminants may include, for example, polyolefins, polystyrenes, polyamides, and polyesters. These resins may further be contaminated by dyes.

The purge material of the invention can be used in any polymer melt processing equipment. Such melt processing equipment in its simplest form can comprise extruders and dies and can be used for cast extrusion, stretching, blown film extrusion, profile extrusion, fiber spinning, blow molding, injection molding, and compounding. The purge material of the invention might also be used in reaction injection molding type systems.

In a preferred embodiment of the method of the invention the purge material may be first formed by compounding all the components of the purge material in a compounder, and then passed through the processing equipment that needs to be purged. In another embodiment, all the components of the purge material may be combined through blending, preferably dry blending, and then passed through the processing equipment directly, thus, circumventing the use of a compounder or use of pre-compounded material. In a further embodiment any combination of the aforesaid two methods may be practiced, e.g., some of the components of the purge material may be combined in a compounder, with which other components of the purge material are blended. There is another preferred embodiment, comprising the step of heating said purge material to between 100 °C and 350 °C while passing through said process equipment. The method of the invention may be repeated successively as many times as desirable to produce the optimal cleaning of the equipment.

The following example is provided to illustrate the invention.

### Example A.

The purge material of the invention is prepared by incorporating a commercial smectite clay- polypropylene masterbatch C.31 PS, supplied by Nanocor, in a homopolymer of polypropylene, DX5E98 supplied by Union Carbide Corporation . The masterbatch C.31 PS is believed to comprise an organoclay, possibly a smectite, which has been functionalized with appropriate intercalant and compatibilizing agents, and a polypropylene. C.31 PS and P4G2Z-073A, both in palletized form, are dry blended in a 20:80 weight ratio to form the purge composition Example A, in accordance with the invention. Such a purge composition is chosen for purging a ZSE-28 Werner and Pfleiderrer twin screw compounder.

The aforesaid twin screw compounder is first subjected to processing a polyolefin charge containing a commercial dye for at least one hour. Subsequently, a conventional purge composition, a low melt flow index (MFI) low density polyethylene (LDPE) with 4.5 MFI is run through the compounder until no coloration can be seen in the output of the compounder. Typically, at this stage the compounder is deemed to be "purged" of all contaminants for practical use.

However, at this point, the purge composition of the invention Example A is passed through the compounder with a barrel temperature profile set at 93° C, 190.5° C, 232° C, 232° C, 246° C at a rate of 3.3 pounds/hour (1.5 kg/hour). Immediately a colored output can be observed as the purge composition of the invention, effectively purges residual dye from the compounder that the conventional purge failed to expel. Within 30 minutes of the passage of Example A through the compounder clear, color-free output can be detected, signifying completion of the purge. The aforesaid observation confirms the efficacy of the purge material of the invention.

Samples collected of Example A, before and during purging are analyzed by X-ray diffraction technique (XRD) to determine the (001) basal plane spacing, and, hence, the state of intercalation, of the clay in the purge composition. These spacings are listed in Table. 1.

**Table 1**

| **Sample** | **(001) basal plane spacing (Å)** |
|---|---|
| Clay in Example A, before purging | 27 |
| Clay in Example A, during purging | 29 |
| Typical smectite clay | 12 |

It is clear (from Table 1) from a comparison between typical smectite clay without intercalation and clay in Example A before purging, that the clay in the purge material of the invention is an intercalated organoclay. A further comparison between clay in Example A, before and during purging, indicates that the clay gets further intercalated during purging. This further intercalation is attributed to the insertion of the residual dye from the compounder in to the clay lattice, corroborating the efficacy of the purge composition of the invention.

### Examples B1 and B2

Two small charges, (1) one containing C.31PS (clay-polypropylene masterbatch) and P4G2Z-073A (polypropylene homopolymer) in 20:80 weight ratio, and (2) the other containing C.31PS, P4G2Z-073A (Huntsman Corporation), and a cyan dye, a common dye used in imaging products, in 20:79.9:0.1 weight ratio, are separately compounded at 204°C in a Banbury batch mixing apparatus, resulting in Examples B1 and B2, respectively. The dye used in one of the examples comprises C₂₃H₂₅N₃O₂, supplied by Eastman Kodak Company, with the following structure: 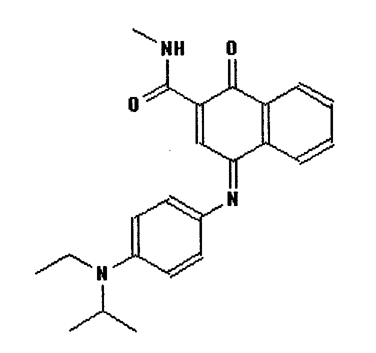 Thus, Examples B1 and B2 are very similar in composition, except the former does not comprise any dye whereas the latter does.

Samples collected of Examples B1 and B2 are analyzed by XRD, to determine the (001) basal plane spacing, and, hence, the state of intercalation, of the clay in the two compositions. These spacings are listed in Table. 2.

**Table 2**

| **Sample** | **(001) basal plane spacing (Å)** |
|---|---|
| Clay in Example B1, without dye | 26 |
| Clay in Example B2, with dye | 29 |
| Typical smectite clay | 12 |

It is clear from Table 2 that the intercalated clay of Example B1 gets further intercalated in Example B2 in the presence of the dye. These data illustrate the general intercalation chemistry associated with the organoclay, and attest to its capability as a significant component of the purge material.

### Examples C1 and C2

The clay used in these examples comprises a commercial organoclay, Cloisite® 25A, believed to be a smectite clay modified by cationic surfactant molecules, supplied by Southern Clay Products. Two small charges, (1) one containing Cloisite® 25A and P4G2Z-073A (Huntsman Corporation) in 10:90 weight ratio, and (2) the other containing Cloisite® 25A, P4G2Z-073A, and a cyan dye, in 10:89.9:0.1 weight ratio, are separately compounded at 204°C in a Banbury batch mixing apparatus, resulting in Examples C1 and C2, respectively. The dye used in one of the examples comprises C₂₃H₂₅N₃O₂, supplied by Eastman Kodak Company, with the following structure:

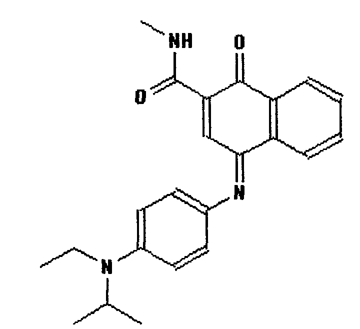

Thus, Examples C1 and C2 are very similar in composition, except the former does not comprise any dye whereas the latter does.

Samples collected of Examples C1 and C2 are analyzed by XRD, to determine the (001) basal plane spacing, and, hence, the state of intercalation, of the clay in the two compositions. These spacings are listed in Table. 3.

**Table 3**

| **Sample** | **(001) basal plane spacing (Å)** |
|---|---|
| Cloisite® 25A Clay in Example C1, without dye | 21 Å |
| Cloisite® 25A Clay in Example C2, with dye | 23 Å |
| Typical Cloisite® 25A Clay | 21 Å |

It is clear from Table 3 that the intercalated clay of Example C1 gets further intercalated in Example C2 in the presence of the dye. These data illustrate the general intercalation chemistry associated with an organoclay provided by different vendor and attest to its capability as a significant component of the purge material.

### Examples D1 and D2

The clay used in these examples comprise a commercial clay, Cloisite® Na believed to be a natural smectite clay unmodified by any organic molecule, supplied by Southern Clay Products. The thermoplastic polymer in these examples comprise a low density polyethylene D4002P, supplied by Eastman Chemicals. The dye used in one of the examples comprises Astra Blue 6GLL, supplied by Aldrich Chemical Company, with the following structure:

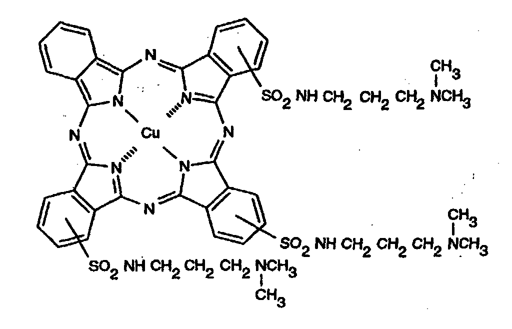

Two small charges, (1) one containing Cloisite® Na and D4002P in 5:95 weight ratio, and (2) the other containing Cloisite® Na, D4002P, and Astra Blue 6GLL, in 5:90:5 weight ratio, are separately compounded at 204°C in a small vial with a spatula, resulting in Examples D1 and D2, respectively. Thus, Examples D1 and D2 are very similar in composition, except the former does not comprise any dye whereas the latter does.

Samples collected of Examples D1 and D2 are analyzed by XRD, to determine the (001) basal plane spacing, and, hence, the state of intercalation, of the clay in the two compositions. These spacings are listed in Table. 3.

**Table 4**

| **Sample** | **(001) basal plane spacing (Å)** |
|---|---|
| Closite Na Clay in Example D1, without dye | 12 Å |
| Closite Na Clay in Example D2, with dye | 17Å |
| Typical Cloisite® Na Clay | 12 Å |

It is clear from Table 4 that a smectite clay, previously unmodified by any organic molecules, can be intercalated by a typical dye. These data illustrate the intercalation chemistry of clay, which is not an organoclay, and attest to its capability as a significant component of the purge material.

## Claims

1. A purge material comprising at least one thermoplastic polymer and at least one layered inorganic particle wherein said at least one layered inorganic particle is capable of intercalation by at least one residual contaminant.

2. The purge material of Claim 1 wherein said at least one inorganic particle comprises a hydrotalcite.

3. The purge material of Claim 1-2 wherein said at least one inorganic particle comprises a smectite.

4. The purge material of Claim 1-3 wherein said at least one inorganic particle comprises an intercalated particle.

5. The purge material of Claim 1-4 wherein said at least one layered inorganic particle has a lateral dimension from 0.01 µm to 5 µm.

6. The purge material of Claim 1-5 wherein said at least one layered inorganic particle has a thickness of from 0.5 µm to 10 µm.

7. The purge material of Claim 1-6 wherein said at least one layered inorganic particle comprises an aspect ratio greater than 10:1.

8. The purge material f Claim 1-7 wherein said at least one layered inorganic particle comprises a phyllosilicates with ion exchange capacity of 50 to 300 milliequivalents per 100 grams.

9. The purge material of Claim 1-8 wherein said residual contaminant comprises at least one member selected from the group consisting of resins, nucleating agents, fillers, plasticizers, surfactants, intercalants, compatibilizers, coupling agents, impact modifiers, chain extenders, colorants, lubricants, antistatic agents, pigments, dispersants, metallic salts of fatty acids, dyes, antioxidants, fluorescent whiteners, ultraviolet absorbers, fire retardants, roughening agents, cross linking agents, and foaming agents.

10. A method of purging comprising:
adding a purge material according to Claims 1-9 comprising at least one thermoplastic polymer and at least one layered inorganic particle into polymer melt processing equipment, wherein said polymer melt processing equipment contains at least one residual contaminant; and
passing said purge material through said processing equipment, wherein said residual contaminant intercalates said layered inorganic particle thereby removing said residual contaminant from said polymer melt processing equipment.
